# EUROPEAN PATENT APPLICATION

(11) **EP 1 688 719 A1**
(43) Date of publication of application: **09.08.2006**
(21) Application number: 06250604.3
(22) Date of filing: 03.02.2006
(51) Int. Cl.: G01G 19/56

(54) **Weighing scale**

(30) Priority: 04.02.2005 GB 0502385
(71) Applicant: Terraillon Holdings Limited, Dublin (IE)
(72) Inventor: Stephens, Brian Design partners, Bray County Wicklow (IE)
(74) Representative: Johnson, Terence Leslie

(57) **Abstract**

The invention relates to a kitchen scale system 1 which is used on a substantially horizontal surface 2 for weighing an item and is stowed in a position substantially at 90° to the horizontal surface, including a scale 3 comprising a support 4 externally of a lateral surface of a body 5 of the scale 3 which is adapted for reception by a separate hanger device 6 which is affixable to a surface 7 substantially at 90° to the horizontal surface 2. The scale can thus be stowed.

The body 5 has a boundary wall or lateral body surface 9 from which projects a support or projection 10 which terminates in a substantially circular in plan boss or housing 11 which in turn supports a weight indicator means 12, in the embodiment an LCD device.

## Description

The invention relates to weighing scales, particularly to kitchen scales.

Kitchens or other areas for handling or preparing food often have work-surfaces of limited space. Moreover, cooking ingredients often have to be weighed, for which purpose a weighing or kitchen scale is usually used. In order to provide for a maximum working space of a working surface, a kitchen scale is often stored in a cupboard, which makes it inconvenient to use.

It is an object of the invention to seek to mitigate this disadvantage.

According to the invention there is provided a kitchen scale system which is used on a substantially horizontal surface for weighing an item and is stowed in a position substantially at 90° to the horizontal surface, the scale comprising a support externally of a lateral surface of a body of the scale, which support is adapted for reception by a separate hanger device which is affixable to a surface substantially at 90° to the horizontal surface, whereby the scale is stowed.

Further, the invention extends to a set for providing a kitchen scale system comprising a kitchen scale and a hanger device therefor.

Using the invention it is possible to provide a kitchen scale which is stowable in sight of a user, but in such a way that a working surface in a kitchen, say, is free of encumbrance.

A kitchen scale system embodying the invention is hereinafter described, by way of example, with reference to the accompanying drawings.

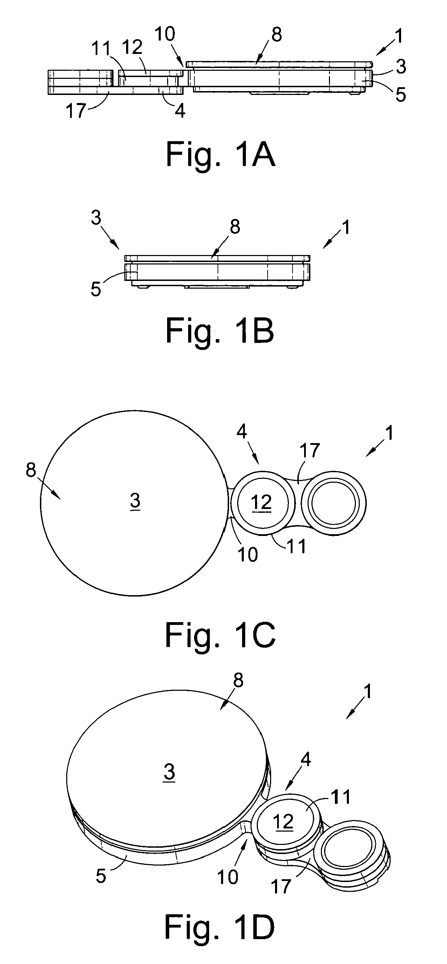

Figs. 1 A - D show a kitchen scale system according to the invention respectively in side elevational, end view, plan and perspective views in a stowed position;

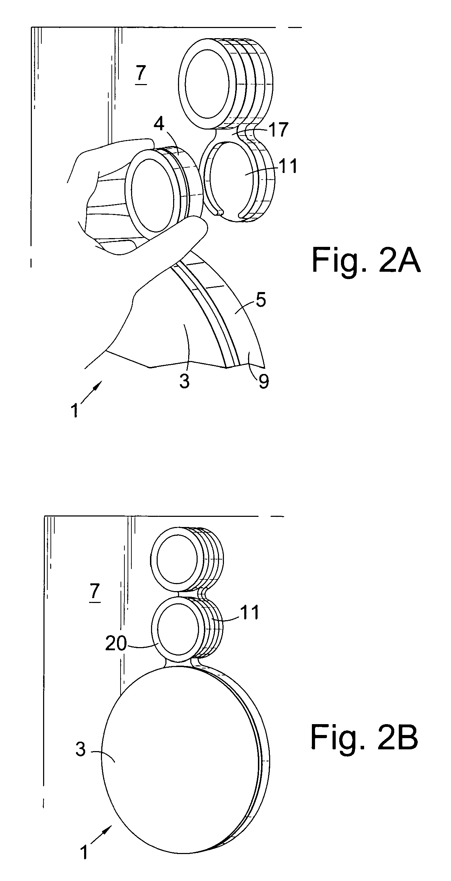

Fig 2A shows to an enlarged scale an operation to stow the scale, shown as part of the system in Fig. 2B, which is an enlarged view of the system shown in Figs. 1A - 1D;
Figs. 3A - 3D show respectively a side elevational view, an end view, a plan view and a perspective view of a hanger device of a kitchen scale system according to the invention;
Fig. 4 shows to an enlarged scale a perspective view of part of the kitchen scale system according to the invention; and

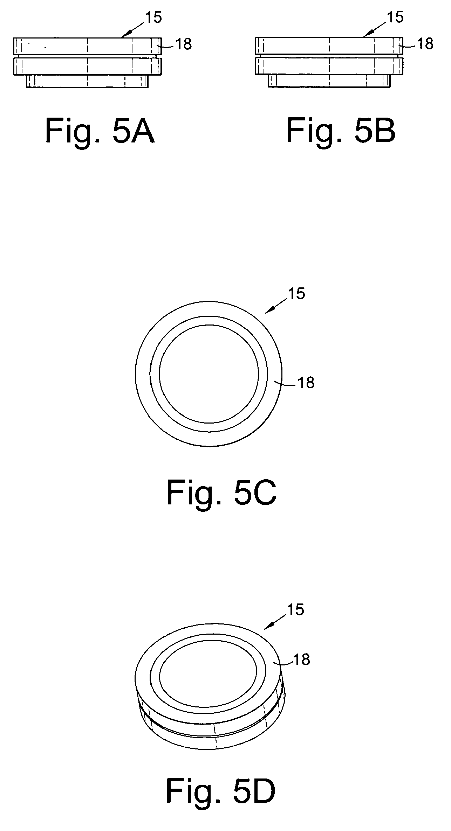

Figs. 5A to 5D show respectively side elevational, plan and perspective views of a time indicator of the kitchen scale system according to the invention.

Referring to the drawings, there is shown a kitchen scale system 1 which is used on a substantially horizontal surface 2 for weighing an item and is stowed in a position substantially at 90° to the horizontal surface, including a scale 3 comprising a support 4 externally of a lateral surface of a body 5 of the scale 3 which is adapted for reception by a separate hanger device 6 which is affixable to a surface 7 substantially at 90° to the horizontal surface 2. The scale can thus be stowed.

The kitchen scale 3 is, as can be seen from the drawings, substantially circular in plan, having a weight-receiving platform 8 on which an item to be weighed is placed, and the substantially circular body 5 of which has substantially the same diameter as the platform 8, and houses a mechanism, usually electrical/electronic, for measuring the weight of an item to be weighed.

The body 5 has a boundary wall or lateral body surface 9 from which projects a support or projection 10 which terminates in a substantially circular in plan boss or housing 11 which in turn supports a weight indicator means 12, in the embodiment an LCD device.

The kitchen scale 3 is used to weigh an item by placing the scale, via a base of the body 5, on the substantially horizontal substrate 2 such as a work surface in a kitchen.

The system 1 also includes the hanger device 6 in the form of an integral unit which is adapted for mounting on the surface 7 such as a wall, pillar or the like which will generally be adjacent the work surface 2 and extend at substantially 90° thereto.

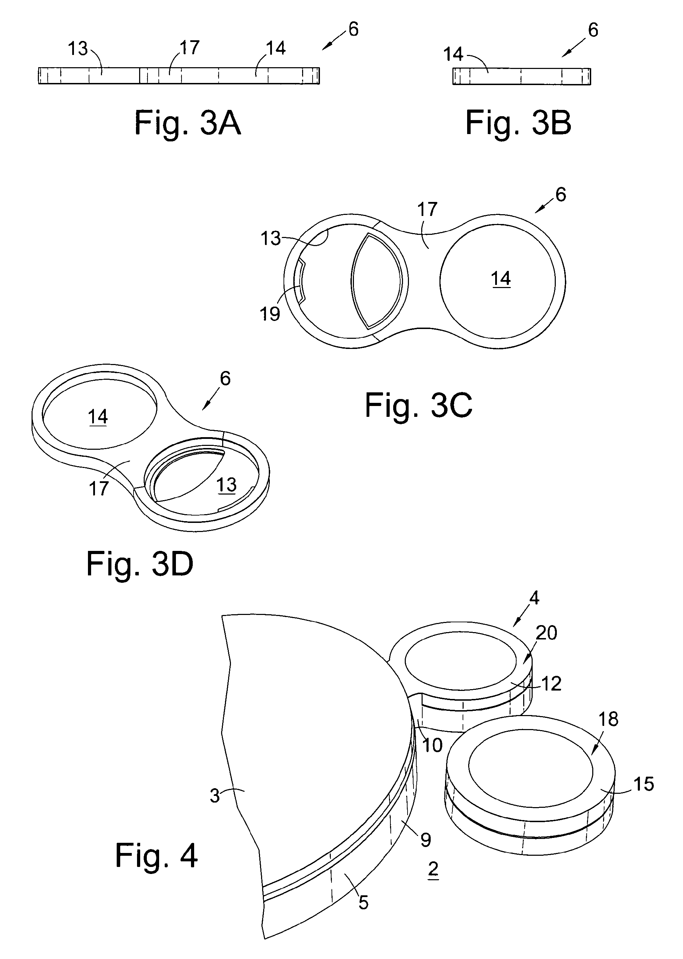

The hanger device 6, has two seatings 13, 14 one 13 respectively for the boss including the LCD and one 14 for receiving a time indicator 15, the two seatings 13, 14 being aligned and in use being substantially vertically aligned, the two seatings 13, 14 being connected via a bridging or connector element 17 to provide an integral unit of substantially figure-of-eight configuration, as shown for example in Fig. 3C.

The upper seating 14 has a rear hook (not shown) or a through hole (also not shown) by which it can be mounted on the wall or pillar 7. Alternatively, where the vertical substrate is of metal, the seating 14 may be magnetised to provide a magnetic support. Other means may be used to "hang" the hanger device 6.

The time indicator 15 is a separate or independent substantially round unit which is a push fit in the associated seating 14. The time indicator can indicate the time, and can also be used as a timer to indicate cooking time(s), for which purpose it also has an alarm such as an audible alarm, a visual alarm, or an audio-visual alarm to warn a user that a timed cooking period is over, or about to elapse.

The bezel 18 of the time indication 15 can be pushed in or pulled out i.e. in a direction at right angles to the face of the timing mechanism, to change modes, including changing from a clock (24 hr) to a cooking sequence mode. The bezel may have a travel of about 5mm to actuate a switch for mode changing.

Alternatively, the bezel 18 may be rockable about a horizontal axis to actuate the mechanism for changing between modes.

The station 13 for receiving the LCD display 12 has a catch or hook 19 which can engage in a complementary recess (not shown) in the body of the LCD 12 to ensure that the kitchen scale 3 is security in position in the seating 13 in the hanger device.

The LCD device 12 has a bezel 20 which is also pivotable or rockable about a horizontal axis so that the scale 3 when in use can be used to add cumulatively, to zero between weighing operations, and to provide a TARE reading.

In use of a set to provide a kitchen scale system according to the invention, the kitchen scale is used to weigh, and when that use is over, it is hung out of the way on the hanger device by offering up the boss of the LCD to the respective (lower) station 13 and pushed in so that releasable interengaging means in the form of the hook and recess engage when the LCD boss is pushed home so hanging the kitchen scale off the work surface and ready for the next use.

## Claims

1. A kitchen scale system which is used on a substantially horizontal surface for weighing an item and is stowed in a position substantially at 90° to the horizontal surface, the scale comprising a support externally of a lateral surface of a body of the scale, which support is adapted for reception by a separate hanger device which is affixable to a surface substantially at 90° to the horizontal surface, whereby the scale is stowed.

2. A system according to Claim 1, the support comprising a projection from a body of the scale.

3. A system according to Claim 2, the projection comprising a weight indicator means.

4. A system according to Claim 3, the weight indicator means comprising a LCD device.

5. A system according to any preceding claim, the hanger comprising a time indicator.

6. A system according to Claim 5, the time indicator comprising a clock and/or a timer.

7. A system according to Claim 6, the hanger device comprising two stations respectively for receiving the support and the time indicator.

8. A system according to Claim 7, the stations being connected by a connector piece.

9. A system according to Claim 8, the hanger device comprising an integral unit.

10. A system according to Claim 10, one station being adapted for mounting the hanger device on an upright surface.

11. A system according to Claim 10, the one station having a through hole, magnet or other suitable means for mounting the device on said upright surface.

12. A system according to Claim 10 or Claim 11, the hanger device comprising a seating for the support and a seating for the time indicator.

13. A system according to Claim 12, the respective seatings and support and time indicator being of complementary configuration.

14. A system according to Claim 13, the respective configurations being substantially circular in plan.

15. A system according to Claim 14, the support and time indicator being a push fit in their respective seatings.

16. A system according to Claim 155, the hanger device comprising a substantially figure-of-eight configuration.

17. A system according to any of Claims 2 to 16, the LCD and/or time indicator respectively including a bezel which is operative to provide a variety of settings for the respective LCD or time indicator.

18. A system according to Claim 16, the bezel being pivotable or rockable to operate actuating means for the respective LCD or time indicator.

19. A system according to Claim 18, the bezel being depressable to operate actuating means for the respective LCD or time indicator.

20. A system according to any preceding claim, the scale being substantially circular in plan.

21. A set of parts for providing a kitchen scale system, comprising a kitchen scale, and a separate hanger device adapted to be secured to a support surface.
